# FASCICULE DE BREVET EUROPEEN

(11) **EP 1 938 109 B1**
(45) Date de publication et mention de la délivrance du brevet: **02.04.2014**
(21) Numéro de dépôt: 06831214.9
(22) Date de dépôt: 21.09.2006
(51) Int. Cl.: G01P 13/02, G01P 5/26, G01S 17/58, G01S 17/95, G01K 13/02, G01S 17/02, G01P 5/165

(54) **SYSTEME DE SURVEILLANCE DE PARAMETRES ANEMOBAROCLINOMETRIQUES POUR AERONEFS**
SYSTEM ZUR ÜBERWACHUNG ANEMOMETRISCHER, BAROMETRISCHER UND KLINOMETRISCHER PARAMETER IN FLUGZEUGEN
SYSTEM FOR MONITORING ANEMOBAROCLINOMETRIC PARAMETERS FOR AIRCRAFT

(30) Priorité: 27.09.2005 FR 0552895
(43) Date de publication de la demande: 02.07.2008
(73) Titulaire: AIRBUS OPERATIONS (S.A.S), 31060 Toulouse (FR)
(72) Inventeur: PREAUX, Guillaume, 31400 TOULOUSE (FR)
(74) Mandataire: Sarraméa, Claude
(86) Numéro de dépôt international: PCT/FR2006/050926
(87) Numéro de publication internationale: WO 2007/036662

(56) Documents cités:
- EP-A1- 0 374 822
- US-A- 4 483 614
- POGOSOV G A ET AL: "USE OF ON-BOARD LASER DOPPLER SYSTEMS TO MEASURE THE WIND-SPEED PARAMETERS OF AIRCRAFT FLIGHT" MEASUREMENT TECHNIQUES, CONSULTANTS BUREAU. NEW YORK, US, vol. 37, no. 9, septembre 1994 (1994-09), pages 1036-1041, XP000524482 ISSN: 0543-1972

## Description

### Domaine de l'invention

L'invention concerne un système de surveillance des paramètres anémobaroclinométriques dans un aéronef. Ce système permet de connaître, à bord de l'aéronef, la valeur des paramètres anémobaroclinométriques relatifs au vol de l'aéronef. Les paramètres anémobaroclinométriques sont les paramètres liés à la position et à la vitesse de l'aéronef en vol par rapport à l'air environnant.

L'invention trouve des applications dans le domaine de l'aéronautique et, en particulier, dans le domaine de la mesure des paramètres relatifs à l'anémoclinométrie des aéronefs.

### Etat de la technique

A bord d'un aéronef, il est important de connaître certaines informations relatives au vol de l'aéronef. Des techniques de mesures anémométriques permettent de connaître ces informations, notamment, la vitesse de l'aéronef, sa position dans l'espace par rapport à l'air, son altitude ainsi que des paramètres directs de l'air. Ces informations sont appelées paramètres anémobaroclinométriques. Parmi ces paramètres anémobaroclinométriques, il y a les paramètres relatifs à l'air environnant l'aéronef, tels que la pression statique, la pression dynamique ou encore la température totale. Il y a également les paramètres relatifs à la position de l'aéronef, dans cet environnement, tels que la vitesse de l'aéronef, son angle d'attaque ou encore son angle de dérapage. L'angle d'attaque est l'angle relatif entre la direction de l'écoulement d'air et la trajectoire horizontale de l'aéronef. L'angle de dérapage de l'aéronef est l'angle de l'écoulement de l'air par rapport à la trajectoire de l'aéronef.

A partir de la valeur de certains de ces paramètres, il est possible de déterminer la valeur de certains autres de ces paramètres. Ainsi, pour connaître la valeur de tous les paramètres anémobaroclinométriques utiles à bord de l'aéronef, on mesure certains de ces paramètres anémobaroclinométriques pour en déduire les autres paramètres.

Actuellement, on mesure les paramètres à bord de l'aéronef au moyen de différentes sondes placées en extérieur de l'aéronef, sur la peau externe de l'aéronef.

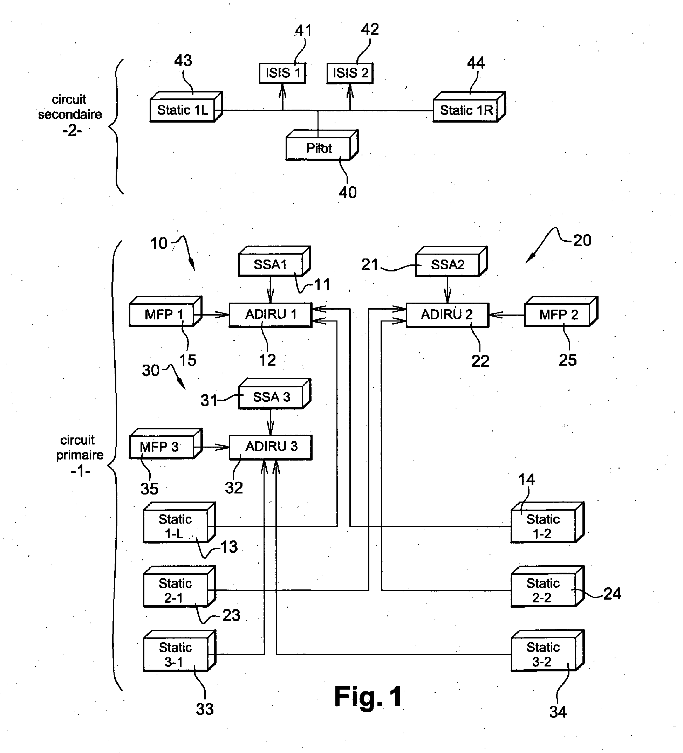

Un système classique de détection de paramètres anémobaroclinométriques dans un aéronef est représenté sur la figure 1. Ce système comporte un circuit de détection primaire 1 et un circuit de détection secondaire 2, appelé aussi circuit de secours, utilisé en cas de non - fonctionnement du circuit primaire ou de problèmes de mesure détectés sur le circuit primaire 1.

Le circuit primaire 1 comporte plusieurs voies de mesure. Généralement, le circuit primaire comporte trois voies de mesure 10, 20, 30 sensiblement identiques. Ces trois voies de mesure 10, 20 et 30 assurent toutes une mesure des mêmes paramètres. L'existence de plusieurs voies de mesure dans un même circuit a pour but d'assurer une redondance des mesures, pour des raisons de sécurité du vol de l'aéronef. On s'assure ainsi que la mesure obtenue est correcte.

Classiquement, chaque voie de mesure 10, 20 ou 30 du circuit primaire 1 comporte :
- une ou plusieurs sonde(s) de détection de la pression statique 13-14, 23-24 ou 33-34,
- une sonde de détection de la pression dynamique, ou pression totale,
- une sonde de mesure de la température totale, et
- une sonde de mesure de l'angle d'attaque de l'aéronef.

Dans certains aéronefs, plusieurs sondes sont regroupées en une seule et même sonde qui fournit plusieurs valeurs de paramètres. Dans le cas de la figure 1, une sonde multifonctions MFP 15, 25, 35 assure la mesure de la pression dynamique, de la température totale, et de l'angle d'attaque.

A bord de certains aéronefs, comme dans l'exemple de la figure 1, une sonde SSA (side-slip angle, en termes anglo-saxons) 11, 21, 31 est utilisée pour mesurer l'angle de dérapage de l'aéronef.

Pour chaque voie de mesure, les informations mesurées par les différentes sondes sont transmises à un dispositif de traitement de données ADIRU 12, 22, 32. Ce dispositif de traitement de données 12, 22, 32 assure le traitement des mesures relevées par les sondes et la détermination des valeurs des autres paramètres non mesurés. Il assure, par exemple, la détermination de la vitesse corrigée (computed air speed, en termes anglo-saxons), de la vitesse vraie de l'aéronef (true airspeed, en termes anglo-saxons) et du nombre de Mach de l'aéronef.

Comme expliqué précédemment, les systèmes de surveillance classiques comportent un premier niveau de sécurité obtenu par la redondance des mesures dans le circuit primaire 1. Généralement, les systèmes de surveillance classiques comportent un second niveau de sécurité obtenu par le circuit secondaire 2. Classiquement, ce circuit secondaire 2 comporte une ou plusieurs sonde(s) de pression statique 43, 44 et un tube de Pitot 40 qui assure la détection de la pression dynamique de l'air. Ce circuit secondaire 2 comporte un ou plusieurs dispositifs de traitement des données 41, 42 qui assurent le traitement des valeurs mesurées pour en déduire la valeur de paramètres anémobaroclinométriques non mesurés.

De cette façon, en cas de défaillance du circuit primaire 1, les informations minimales nécessaires à la sécurité du vol de l'aéronef sont fournies par le circuit secondaire 2.

Comme expliqué précédemment, la sécurité de vol est assurée, dans les systèmes de surveillance de paramètres anémobaroclinométriques classiques, par la redondance des voies de mesure dans le circuit primaire et par l'existence du circuit secondaire. En d'autres termes, la sécurité est obtenue au moyen de circuits de détection alliant la mécanique et l'électronique. Ces circuits de détection primaire et secondaire sont donc des circuits de même type, mécanique et électronique. En conséquence, si un phénomène est susceptible de provoquer un dysfonctionnement d'un élément du système, par exemple une sonde de pression statique, alors tous les éléments similaires du système, c'est-à-dire toutes les sondes de pression statique, sont également atteintes. Il n'y a alors aucun moyen, dans tout le système, de connaître la pression statique de l'air.

En outre, les différentes sondes utilisées dans les systèmes classiques sont installées sur la peau externe de l'aéronef, en saillie de ladite peau. En particulier, le tube de pitot est un tube qui dépasse sous l'aéronef et qui est placé dans le sens d'avancement de l'aéronef. La sonde de pression statique nécessite une ouverture dans la paroi du fuselage, perpendiculairement au sens d'avancement de l'aéronef. Les sondes de mesure d'angle d'attaque et d'angle de dérapage comportent chacune une ailette mobile, montée sur un axe de rotation, sensible à la variation de l'écoulement d'air par rapport à l'aéronef. Ces sondes constituent donc des protubérances sur la peau externe de l'aéronef. Elles apportent ainsi une traînée à l'aéronef. De plus, elles peuvent générer du bruit.

En outre, ces sondes sont sensibles au givre et à la pluie. Pour éviter que le givre ne se dépose sur une sonde, celle-ci doit être équipée de moyens de réchauffement, ce qui augmente le volume de la sonde et, par conséquent, la taille de la protubérance sur la peau externe de l'aéronef.

Le document POGOSOV G A ET AL: "USE OF ON-BOARD LASER DOPPLER SYSTEMS TO MEASURE THE WIND-SPEED PARAMETERS OF AIRCRAFT FLIGHT" (XP000524482) décrit un système de surveillance de paramètres anémobaroclinométriques dans un aéronef, comprenant un circuit de détection primaire comprenant des dispositifs de mesure de la pression statique, de l'angle de dérapage, de la pression dynamique , de la température totale et de l'angle d'attaque de l'aéronef. Ce système comporte en outre un circuit de détection secondaire apte à fournir des informations minimales nécessaires à la sécurité du vol de l'aéronef en cas de défaillance du circuit primaire. Un élément de sécurité supplémentaire en forme d'un anémomètre laser fait partie dudit circuit de détection secondaire.

### Exposé de l'invention

L'invention a justement pour but de remédier aux inconvénients des techniques exposées précédemment. Pour cela, l'invention propose un système de surveillance de paramètres anémobaroclinométriques dans lequel la redondance ou le doublage des mesures est obtenu par une technique autre que la mécanique. L'invention propose donc de remplacer une voie de mesure classique par un tel circuit de mesure de type optique. Ce circuit de mesure optique comporte un anémomètre laser.

Un anémomètre laser peut être ajouté aux circuits primaire et secondaire pour apporter un élément de sécurité supplémentaire avec des mesures supplémentaires de paramètres. Il peut aussi remplacer totalement ou partiellement le circuit secondaire classique ou une voie de mesure du circuit primaire pour apporter un élément de sécurité supplémentaire avec l'utilisation d'une technique de mesure nouvelle.

De façon plus précise l'invention concerne un système de surveillance de paramètres anémobaroclinométriques dans un aéronef selon la présente revendication 1.

Selon d'autres exemples ne concernant pas l'invention revendiquée, un système de surveillance peut comporter une ou plusieurs des caractéristiques suivantes :
- l'anémomètre laser est intégré dans un circuit de détection secondaire.
- le système comporte un circuit de détection secondaire comprenant au moins un dispositif de mesure de la pression statique, au moins un dispositif de mesure de la pression dynamique et au moins un dispositif de traitement des données fournies par les dispositifs de mesure, l'anémomètre laser constituant un circuit de surveillance des paramètres.

### Brève description des dessins

La figure 1, déjà décrite, représente le diagramme fonctionnel d'un système de surveillance de paramètres anémobaroclinométriques classique.
La figure 2 représente un schéma fonctionnel du système de surveillance de paramètres anémobaroclinométriques dans le cas où l'anémomètre laser constitue un troisième circuit de mesure.
La figure 3 représente un schéma fonctionnel du système de surveillance de paramètres anémobaroclinométriques dans le cas où l'anémomètre laser constitue le circuit de mesure secondaire.
La figure 4 représente un schéma fonctionnel du système de surveillance de paramètres anémobaroclinométriques selon l'invention, où l'anémomètre laser constitue une voie de mesure du circuit de mesure primaire.

### Description détaillée

Le système de surveillance de paramètres anémobaroclinométriques selon l'invention propose d'utiliser en remplacement d'une voie de mesure classique, un anémomètre de type laser permettant une mesure optique de certains paramètres anémobaroclinométriques. En effet, un anémomètre laser permet de mesurer certains paramètres anémobaroclinométriques, notamment la vitesse de l'aéronef dans ses trois directions, donc son vecteur vitesse, ce qui permet de retrouver l'angle d'attaque de l'aéronef et la composante de dérapage de l'aéronef.

Un anémomètre laser procède par mesure du décalage que subit une onde lumineuse monochromatique, en particulier une onde laser, lorsqu'elle est rétrodiffusée par les aérosols (particules et/ou molécules) présents dans l'atmosphère. Ce décalage permet de déterminer la composante du vecteur vitesse suivant l'axe de visée. Autrement dit, un anémomètre laser émet un rayonnement laser à une distance prédéterminée de quelques mètres ou quelques dizaines de mètres au-delà de l'aéronef et réceptionne ce rayonnement laser après rétrodiffusion par l'air. La composante du vecteur vitesse suivant l'axe de visée est directement liée au changement de la longueur d'onde du rayonnement laser.

En émettant trois rayonnements laser selon trois directions différentes, l'anémomètre laser est capable de déterminer les trois composantes du vecteur vitesse de l'aéronef. Pour des raisons de sécurité et de disponibilité, c'est-à-dire pour s'assurer que la mesure réalisée par ces trois émissions est exacte, une quatrième émission de rayonnement laser peut être réalisée, suivant une quatrième direction, qui permet de vérifier qu'elle correspond bien au résultat obtenu par les trois émissions précédentes.

Cette mesure des composantes du vecteur vitesse fournie le paramètre TAS de vitesse vraie de l'aéronef. La vitesse vraie de l'aéronef est la vitesse de l'aéronef par rapport à un air non perturbé. A partir de cette vitesse vraie, l'anémomètre laser peut en déduire le paramètre d'angle d'attaque AOA (angle of attack, en termes anglo-saxons) de l'aéronef et le paramètre d'angle de dérapage SSA de l'aéronef. Selon certaines technologies, l'anémomètre laser peut également fournir une mesure des paramètres suivants :
- température totale TAT, c'est-à-dire la température totale extérieure à l'aéronef,
- vitesse corrigée CAS, c'est-à-dire la vitesse corrigée de l'aéronef, ainsi que
- le nombre de Mach, c'est-à-dire la vitesse de l'aéronef prenant en compte les variations de densité de l'air, ce qui correspond à la vitesse de l'aéronef par rapport à la vitesse du son.

L'anémomètre laser peut être placé dans un logement réalisé à proximité de la peau externe de l'aéronef et protégé par un hublot assurant le passage optique des rayonnements laser. L'anémomètre laser peut donc être placé à l'intérieur du fuselage, c'est-à-dire sans générer de protubérance sur la peau externe. Il permet ainsi une mesure de paramètres sans génération de traînée ou de bruit.

En outre, comme l'anémomètre laser est logé dans le fuselage de l'aéronef, il est protégé de l'écoulement d'air et donc peu sensible au givre et à la pluie.

Un tel anémomètre laser permet ainsi une mesure de paramètres avec une technologie optique, différente de la technologie mécanique des sondes des circuits primaire et secondaire classiques. Cette mesure de paramètres avec une technologie optique permet d'apporter un niveau de sécurité supplémentaire à la mesure de paramètres actuelle. Ce niveau de sécurité supplémentaire peut être apporté :
- soit en ajoutant un circuit de mesure supplémentaire comportant au moins un anémomètre laser,
- soit en remplaçant le circuit secondaire ou une voie du circuit primaire par un anémomètre lasser.

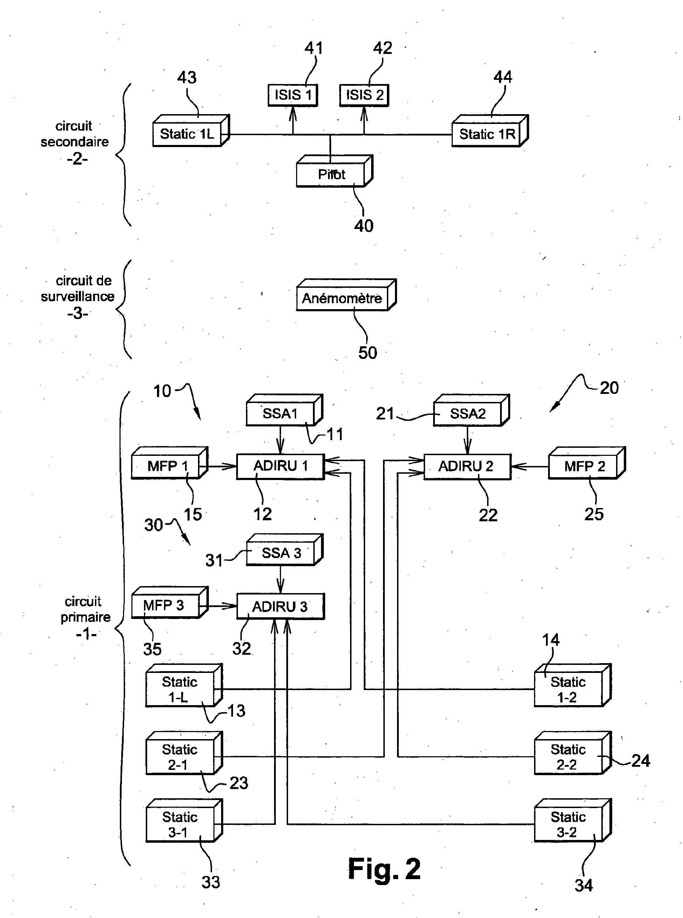

Dans un premier exemple, représenté sur la figure 2, et ne concernant pas l'invention revendiquée, l'anémomètre laser est intégré dans un circuit de mesure supplémentaire, assurant une mesure de paramètres anémobaroclinométriques complémentaire des mesures effectuées par le circuit primaire et le circuit secondaire. Ce circuit de mesure supplémentaire est appelé circuit de surveillance 3. Dans cet exemple, les circuits primaire 1 et secondaire 2 sont identiques aux circuits primaire et secondaire classiques montrés sur la figure 1. Ils ne sont donc pas décrits à nouveau.

Dans l'exemple de la figure 2, le circuit de surveillance 3 comporte au moins un anémomètre 50 utilisé pour réaliser une surveillance des paramètres mesurés par le circuit primaire 1 ou le circuit secondaire 2, en cas de défaut du circuit primaire 1. Les mesures obtenues par l'anémomètre 50 peuvent alors être comparées aux mesures obtenues par le circuit primaire 1 de façon à vérifier que tous les paramètres obtenus se situent dans la gamme de mesures attendue. L'anémomètre 50 apporte alors une sécurité supplémentaire par rapport à la validité des mesures.

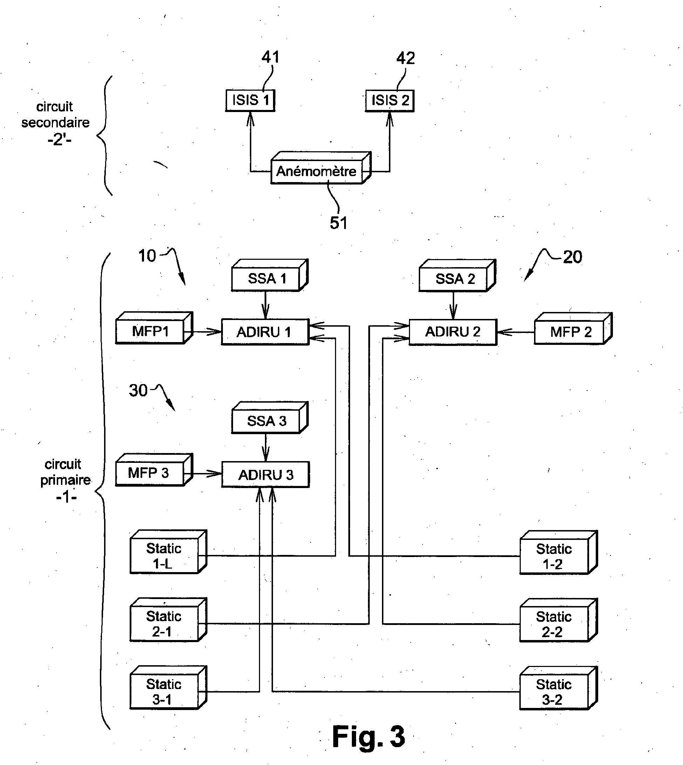

Dans un autre exemple, représenté sur la figure 3, et ne concernant pas l'invention revendiquée, l'anémomètre laser est intégré dans le circuit secondaire, en remplacement des sondes classiques. Dans cet exemple, le circuit primaire 1 est identique au circuit primaire classique. il n'est donc pas décrit à nouveau.

Dans cet exemple, le circuit secondaire 2' comporte au moins un anémomètre 51 qui assure la mesure de paramètres anémobarodinométriques, en remplacement des sondes statiques 43, 44 et du tube de Pitot 40 d'un circuit secondaire classique. Selon l'anémomètre choisi, celui-ci peut être relié aux dispositifs de traitements 41 et 42, décrits précédemment. Ces dispositifs de traitement 41 et 42 assurent le traitement des données mesurées pour en déduire d'autres paramètres anémobaroclinométriques ; ils assurent également la liaison avec l'ordinateur de bord de l'aéronef. L'anémomètre peut aussi être apte à déterminer lui-même les paramètres anémobaroclinométriques non mesurés.

Dans cet exemple, l'anémomètre contribue à former le circuit de secours 2' utilisé en cas de dysfonctionnement du circuit primaire 1. Dans cet exemple, le circuit de secours a l'avantage d'utiliser une technique différente du circuit primaire et donc utilisable avec une plus grande sécurité si les trois voies de mesure du circuit primaire présentent un même défaut de fonctionnement.

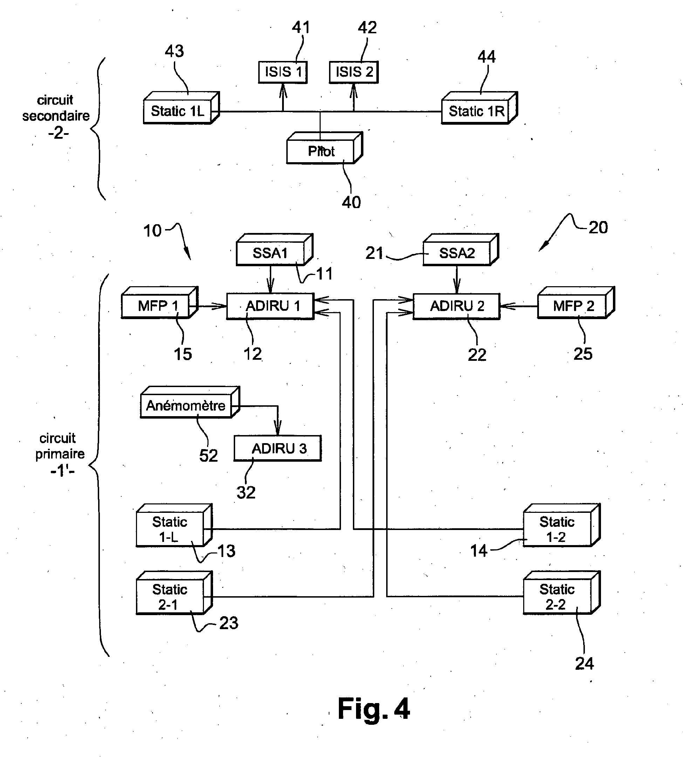

Dans un mode de réalisation de l'invention, représenté sur la figure 4, l'anémomètre laser est intégré dans le circuit primaire 1' en remplacement d'une voie de mesure du circuit primaire classique. dans ce mode de réalisation, le circuit secondaire 2 est identique au circuit secondaire classique décrit précédemment. Il n'est donc pas décrit à nouveau.

Dans ce mode de réalisation, l'anémomètre 52 constitue une voie de mesure du circuit primaire 1'. L'anémomètre 52 est donc intégré dans le circuit primaire 1' en remplacement de la voie de mesure 30. Selon l'anémomètre choisi, celui-ci peut être connecté au dispositif de traitement 32 qui assure la détermination des paramètres anémobaroclinométriques non mesurés et la liaison avec l'ordinateur de bord. L'anémomètre peut aussi être apte à déterminer lui-même les paramètres anémobaroclinométriques non mesurés

L'anémomètre 52 constitue, dans ce mode de réalisation, une redondance des voies de mesure 10 et 20 du circuit primaire 1'. Dans ce mode de réalisation, l'anémomètre laser 52 augmente la fiabilité du système par le fait qu'il fournit une redondance obtenue par une technologie différente des deux autres voies de mesure 10 et 20 du circuit primaire.

Dans une variante de l'invention, un second anémomètre laser peut être implémenté dans une des voies de mesure 10 ou 20 du circuit primaire 1'. Le circuit primaire comporte alors une voie de mesure classique comportant des sondes et deux voies de mesure conformes à l'invention comportant chacune un anémomètre laser.

L'intégration d'au moins un anémomètre laser dans le circuit primaire, le circuit secondaire ou dans un circuit de surveillance permet de mesurer la vitesse vraie de l'aéronef et, à partir de cette vitesse vraie, de retrouver tous les paramètres anémobaroclinométriques utilisés généralement à bord d'un aéronef en utilisant une technologie autre que la mécanique.

## Revendications

1. Système de surveillance de paramètres anémobaroclinométriques dans un aéronef, comportant :
- un circuit de détection primaire (1') redondant comprenant au moins trois voies de mesure (10, 20, 52) parmi lesquelles au moins une première voie de mesure (10) comporte :
- un dispositif de mesure d'une pression statique de l'air (13, 14),
- un dispositif de mesure d'un angle de dérapage de l'aéronef,
- un dispositif de mesure (15) d'une pression dynamique, d'une température totale et d'un angle d'attaque de l'aéronef, et
- un dispositif de traitement de données (12) apte à déterminer des paramètres anémobaroclinométriques à partir des mesures de pression statique, d'angle de dérapage, de pression dynamique, de température totale et d'angle d'attaque ;
- un circuit de détection secondaire (2) apte à fournir des informations minimales nécessaires à la sécurité du vol de l'aéronef en cas de défaillance du circuit primaire (1') ; et
- au moins un anémomètre laser (52) pour mesurer au moins un paramètre de vitesse vraie de l'aéronef, cet anémomètre laser constituant une troisième voie de mesure du circuit de détection primaire (1') et assurant une redondance de la première voie de mesure (10) et d'une deuxième voie de mesure (20) du circuit de détection primaire, par une technologie optique, pour apporter un élément de sécurité supplémentaire.

2. Système selon la revendication 1, **caractérisé en ce que** la deuxième voie de mesure (20) du circuit primaire (1') est similaire à la première voie de mesure.

3. Système selon la revendication 1, **caractérisé en ce que** la deuxième voie de mesure du circuit primaire intègre un second anémomètre laser.

4. Système selon l'une quelconque des revendications précédentes, **caractérisé en ce que** l'anémomètre laser est apte à déterminer des paramètres anémobaroclinométriques non mesurés ou est relié à un dispositif de traitement (32) apte à déterminer des paramètres anémobaroclinométriques non mesurés.

5. Système selon l'une quelconque des revendications précédentes, **caractérisé en ce que** l'anémomètre laser est placé dans un logement réalisé à proximité de la peau externe de l'aéronef et protégé par un hublot assurant le passage optique des rayonnements laser.

## Patentansprüche

1. System zum Überwachen anemo-baroklinometrischer Parameter in einem Flugzeug, das Folgendes umfasst:
- eine redundante primäre Detektionsschaltung (1'), die wenigstens drei Messwege (10, 20, 52) aufweist, wovon wenigstens ein erster Messweg (10) Folgendes umfasst:
- eine Vorrichtung zum Messen eines statischen Drucks der Luft (13, 14),
- eine Vorrichtung zum Messen eines Schiebewinkels des Flugzeugs,
- eine Vorrichtung (15) zum Messen eines dynamischen Drucks, einer Gesamttemperatur und eines Anstellwinkels des Flugzeugs und
- eine Datenverarbeitungsvorrichtung (12), die anemo-baroklinometrische Parameter anhand der Messungen des statischen Drucks, des Schiebewinkels, des dynamischen Drucks, der Gesamttemperatur und des Anstellwinkels bestimmen kann;
- eine sekundäre Detektionsschaltung (2), die im Fall eines Ausfalls der primären Schaltung (1') minimale Informationen, die für die Sicherheit des Flugs des Flugzeugs notwendig sind, liefern kann; und
- wenigstens ein Laser-Anemometer (52), um wenigstens einen Parameter der Ist-Geschwindigkeit des Flugzeugs zu messen, wobei dieses Laser-Anemometer einen dritten Messweg der primären Detektionsschaltung (1') bildet und eine Redundanz des ersten Messwegs (10) und eines zweiten Messwegs (20) der primären Detektionsschaltung durch eine optische Technologie sicherstellt, um ein zusätzliches Sicherheitselement hinzuzufügen.

2. System nach Anspruch 1, **dadurch gekennzeichnet, dass** der zweite Messweg (20) der primären Schaltung (1') zu dem ersten Messweg ähnlich ist.

3. System nach Anspruch 1, **dadurch gekennzeichnet, dass** in den zweiten Messweg der primären Schaltung ein zweites Laser-Anemometer integriert ist.

4. System nach einem der vorhergehenden Ansprüche, **dadurch gekennzeichnet, dass** das Laser-Anemometer nicht gemessene anemo-baroklinometrische Parameter bestimmen kann oder mit einer Verarbeitungsvorrichtung (32) verbunden ist, die nicht gemessene anemo-baroklinometrische Parameter bestimmen kann.

5. System nach einem der vorhergehenden Ansprüche, **dadurch gekennzeichnet, dass** das Laser-Anemometer in einem Aufnahmesitz angeordnet ist, der in der Nähe der Außenhaut des Flugzeugs ausgebildet ist und durch ein Glas geschützt ist, das den optischen Durchgang der Laserstrahlungen gewährleistet.

## Claims

1. System for monitoring anemobaroclinometric parameters in an aircraft, including:
- a redundant primary detection circuit (1') comprising at least three measurement channels (10, 20, 52) among which at least one first measurement channel (10) includes:
- a device for measuring a static air pressure (13, 14),
- a device for measuring an angle of sideslip of the aircraft,
- a device (15) for measuring a dynamic pressure, a total temperature and an angle of attack of the aircraft, and
- a data processing device (2) able to determine anemobaroclinometric parameters on the basis of measurements of static pressure, angle of sideslip, dynamic pressure, total temperature and angle of attack;
- a secondary detection circuit (2) able to supply the minimum information necessary for the flight safety of the aircraft in the event of failure of the primary circuit (1'); and
- at least one laser anemometer (52) to measure at least one true speed parameter of the aircraft, this laser anemometer constituting a third measurement channel of the primary detection circuit (1') and ensuring a redundancy of the first measurement channel (10) and of a second measurement channel (20) of the primary detection circuit, by an optical technology, to contribute an additional safety element.

2. System according to Claim 1, **characterized in that** the second measurement channel (20) of the primary circuit (1') is similar to the first measurement channel.

3. System according to Claim 1, **characterized in that** the second measurement channel of the primary circuit incorporates a second laser anemometer.

4. System according to any one of the preceding claims, **characterized in that** the laser anemometer is able to determine unmeasured anemobaroclinometric parameters or is connected to a processing device (32) able to determine unmeasured anemobaroclinometric parameters.

5. System according to any one of the preceding claims, **characterized in that** the laser anemometer is placed in a housing produced close to the external skin of the aircraft and protected by a shield window ensuring the optical passage of the laser radiation.
